Europäisches Patentamt

European Patent Office

Office européen des brevets

(11) Numéro de publication: **0 401 888 B1**

# FASCICULE DE BREVET EUROPEEN

(45) Date de publication de fascicule du brevet: **01.03.95**  (51) Int. Cl.⁶: **F16K 3/08**

(21) Numéro de dépôt: **90201268.1**

(22) Date de dépôt: **18.05.90**

(54) **Paire de plaques en matériau dur, pour robinet du type fileté, avec champ de manoeuvre étendu.**

(30) Priorité: **09.06.89 IT 6746489**

(43) Date de publication de la demande:
**12.12.90 Bulletin 90/50**

(45) Mention de la délivrance du brevet:
**01.03.95 Bulletin 95/09**

(84) Etats contractants désignés:
**DE FR**

(56) Documents cités:
**DE-A- 3 724 527**
**GB-A- 2 064 727**
**US-A- 4 793 375**

(73) Titulaire: **STUDIO TECNICO SVILUPPO E RI-
CERCHE S.T.S.R. s.r.l.**
**Via Pinzone 2**
**I-46025 Poggio Rusco (Mantova) (IT)**

(72) Inventeur: **Grassberger, Roland, Dipl.-Ing.**
**Rue Capouillet 9-21**
**B-1060 Bruxelles (BE)**

(74) Mandataire: **Patrito, Pier Franco, Dr. Ing.**
**Cabinet PATRITO BREVETTI**
**Via Don Minzoni 14**
**I-10121 Torino (IT)**

Rank Xerox (UK) Business Services
(3. 10/3.09/3.3.3)

EP 0 401 888 B1

## Description

Cette invention a trait à une paire de plaques en matériau dur (ainsi dit matériau céramique, ou similaire), destinée à un robinet du type ainsi dit fileté, comportant un champ de manoeuvre étendu.

Les robinets filetés pourvus d'une paire de plaques en matériau dur comportent une plaque fixe traversée par une ouverture de passage et une plaque mobile, elle aussi traversée par une ouverture de passage, superposée a la plaque fixe en contact avec elle, couplée avec des moyens de manoeuvre qui permettent de la faire tourner. Les ouvertures de passage des plaques fixe et mobile sont projetées de telle sorte que, dans une certaine position de la plaque mobile (position de fermeture) les ouvertures de passage des deux plaques ne se correspondent pas, et donc on obtient une interception complète d'un flux porté à traverser le paire de plaques; dans une autre position de la plaque mobile (position d'ouverture complète) le flux profite de la plus grande section de passage autorisée par la coopération mutuelle des ouvertures de passage des deux plaques, laquelle section le plus souvent correspond à l'ouverture de passage de la plaque mobile; et dans les positions intermédiaires entre les deux positions indiquées le flux profite d'une section de passage qui peut être mod ifiée graduellement, résultant de la superposition partielle des ouvertures de passage des deux plaques. Cela autorise un réglage du débit du flux entre zéro et le débit maximum permis par le robinet.

Dans la plupart des robinets du type considéré, l'angle de manoeuvre qui porte de la position de fermeture à la position d'ouverture complète est d' 1/4 de tour ou bien d' 1/2 tour. Le choix d'une de ces valeurs est suggéré par le fait qu'elles autorisent des conformations très simples des ouvertures de passage des plaques, lesquelles donc sont de fabrication facile. Toutefois cet angle relativement réduit n'est pas favorable aux effets d'un réglage soigneux du débit de la part de l'usager, et pour cette raison on a aussi proposé, voir par exemple le document EP-A-0.329.800 publié le 30.08.1989, d'élargir l'angle de manoeuvre en prévoyant dans une ouverture de passage de l'une des plaques une partie ayant la forme d'un canal courbé de largeur constante, qui prolonge une partie d'ouverture en secteur circulaire dont l'étendue est de presqu' 1/4 de tour. Toutefois, cette conformation des ouvertures de passage des plaques ne donne pas lieu à une loi satisfaisante de la variation du débit en fonction du déplacement angulaire de la plaque mobile. En effet, dans le champ des débits très réduits on obtient une grande sensibilité de réglage, laquelle dans la plupart des cas n'est pas exigée, tandis que la sensibilité du réglage est réduite dans le champ des débits moyens et moyens-hauts, c'est à dire précisément dans le champ où le robinet est utilisé le plus souvent.

Le document GB-A-2,064,727 décrit une paire de plaques pour robinet dans laquelle au moins l'un des côtés qui définissent l'ouverture de passage de l'une des plaques a la conformation d'un arc de spirale linéaire, et l'extrémité de plus petite largeur de cette ouverture de passage est disposée voisin de la périphérie de la plaque. Suivant ce document, l'autre plaque de la paire doit avoir des ouvertures de passage en forme de fentes relativement étroites, de sorte que le débit qui peut être admis par un robinet de certaines dimensions est relativement réduit: c'est à ce prix qu'on obtient une loi favorable de la variation du débit en fonction du déplacement angulaire de la plaque mobile.

Le but de la présente invention est de rationaliser la conformation des ouvertures de passage des plaques constituant les paires de plaques en matériau dur pour des robinest filetés, de sorte à assurer, d'un côté, la réalisation d'une loi plus favorable de la variation du débit en fonction du déplacement angulaire de la plaque mobile, et d'autre côté l'exploitation la plus complète possible, aux effets du réglage, de l'angle de déplacement de la plaque mobile; cela sans pénaliser le débit qui peut traverser le robinet.

Ce but est atteint, suivant l'invention, en ce que l'ouverture de passage de la première plaque de la paire est limitée par un premier et un deuxième côtés représentés par des arcs de cercle ayant leur centre sur l'axe de rotation de la paire de plaques, par un troisième côté représenté par un segment de rayon, et par un quatrième côté étant le côté qui a la forme d'un arc de spirale linéaire.

Par le terme "spirale linéaire" on a indiqué ici une spirale du premier degré, ou spirale d'Archimède, laquelle est caractérisée, en coordonnées polaires, par une équation linéaire du type $r = m \cdot Z + n$ , où $r$ est le rayon vecteur, $Z$ est la coordonnée angulaire courante, $m$ et $n$ sont des paramètres constants.

Du fait qu'au moins l'une des ouvertures de passage est délimitée par un côté substantiellement conformé suivant une spirale linéaire, on obtient une variation extrèmement graduelle, en fonction du déplacement angulaire de la plaque mobile, de la section de passage présentée au flux, et du fait que l'extrémité de plus petite largeur de l'ouverture de passage délimitée par l'arc de spirale linéaire est disposée voisin de la périphérie de la plaque l'angle sous lequel la largeur de superposition, nécessaire pour assurer l'étanchéité dans la position de fermeture, est vue par le centre de rotation de la plaque mobile, est le plus petit possible, et la plus grande partie de l'angle de rotation de la plaque mobile est effectivement exloitée pour régler le débit. La conformation de la première plaque ne demande nullement que l'ouverture de passage de la deuxième plaque soit telle à limiter le débit du robinet.

Le principe de l'invention peut trouver application avantageuse dans les paires de plaques destinées à travailler dans un champ de réglage étendu, compris entre 1/2 tour et 3/4 de tour. Demeurant égales les dimensions générales, par un angle de réglage plus petit on peut présenter au flux une section de passage maximum plus étendue, et donc permettre au robinet un débit maximum plus grand; ou bien, par un angle de réglage plus étendu, on peut obtenir une plus grande sensibilité du réglage. L'auteur du projet peut donc chercher entre ces deux possibilités le compromis le plus favorable pour chaque application. Par exemple, on peut choisir un angle de réglage d'environ 230° ou bien d'environ 270°.

Dans l'application de l'invention, la conformaton suivant une spirale linéaire peut être adoptée pour un côté de l'ouverture de passage d'une plaque seulement, ou bien pour un côté de chaque ouverture de passage des deux plaques; dans ce dernier cas, il est nécessaire que les deux spirales comportent une inclinaison différente.

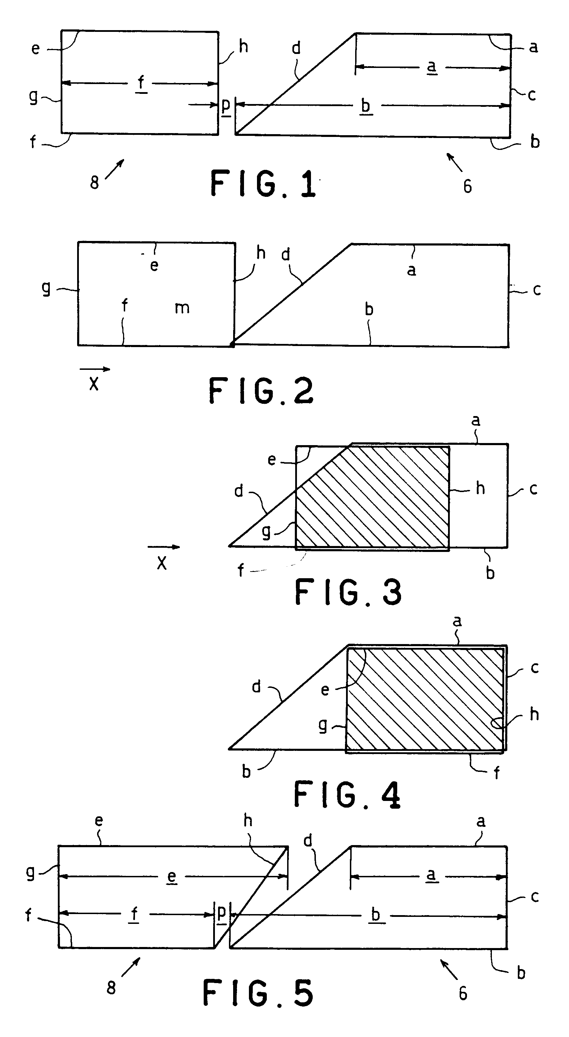

Les caractéristiques et les avantages de l'invention ressortiront plus clairement de la suivante description de certains modes préférés de réalisation, schématiquement représentés dans les dessins annexés, dans lesquels les figures 1 à 5 montrent la transformation en coordonnées orthogonales des conformations qui, représentées en coordonnées polaires, définissent la forme réelle des ouvertures de passage des plaques constituant une paire suivant l'invention. Cette transformation en coordonnées orthogonales autorise une compréhension plus immédiate de la façon de coopérer des ouvertures de passage des deux plaques. Dans les dessins:

Fig. 1 montre en coordonnées orthogonales la conformation des ouvertures de passage de deux plaques capables de coopérer mutuellement, suivant un premier mode de réalisation de l'invention, dans la position de fermeture du robinet;

Fig. 2 montre les mêmes ouvertures de passage dans la position dans laquelle prend commencement l'ouverture du robinet;

Fig. 3 montre les mêmes ouvertures de passage dans une position intermédiaire de réglage;

Fig. 4 montre les mêmes ouvertures de passage dans la position d'ouverture complète du robinet;

Fig. 5 montre, d'une façon similaire de la figure 1, les ouvertures de passage des deux plaques suivant un deuxième mode de réalisation de l'invention;

Fig. 6 montre à une échelle agrandie la conformation réelle des ouvertures de passage suivant le premier mode de réalisation de l'invention, dans une exécution où l'on prévoit un angle de manoeuvre d'environ 230°;

Fig. 7 montre, d'une façon similaire de la figure 6, la conformation réelle des ouvertures de passage suivant le premier mode de réalisation de l'invention, dans une exécution où l'on prévoit un angle de manoeuvre d'environ 270°;

Fig. 8 montre, d'une façon similaire de la figure 6, la conformation réelle des ouvertures de passage suivant le second mode de réalisation de l'invention, dans une exécution où l'on prévoit un angle de manoeuvre d'environ 230°;

Fig. 9 montre, d'une façon similaire de la figure 8, la conformation réelle des ouvertures de passage suivant le second mode de réalisation de l'invention, dans une exécution où l'on prévoit un angle de manoeuvre d'environ 270°;

Fig. 10 montre, à une échelle agrandie, une section axiale d'un robinet fileté faisant usage d'une paire de plaques en matériau dur suivant l'invention.

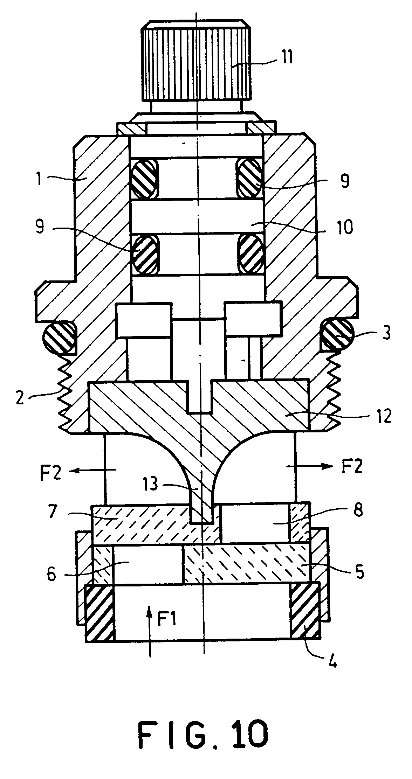

Faisant référence d'abord à la figure 10, un robinet du type ainsi dit fileté, considéré pour l'application de cette invention, comporte un corps 1, destiné à être vissé, par un filetage 2, dans le collecteur (non représenté) d'un groupe de robinetterie, de façon étanche dû à la présence d'une garniture 3. La partie inférieure du corps 1 du robinet est destinée à communiquer, à travers une garniture 4, avec une ouverture d'arrivée pour le flux d'eau à régler, lequel entre dans le robinet suivant la flèche F1 et sort ensuite vers le collecteur par des ouvertures latérales du robinet, suivant les flèches F2. Une plaque fixe 5 en matériau dur, ayant une ouverture de passage 6, est installée dans le corps 1 sur la garniture 4 de sorte à ne pas pouvoir tourner, et une plaque mobile 7, ayant elle-aussi une ouverture de passage 8, est installée sur la plaque fixe 5 de sorte à pouvoir tourner en contact avec elle. Dans la position représentée, les ouvertures de passage 6 et 8 des deux plaques 5 et 7 ne se correspondent pas, et donc on réalise une condition de fermeture. Dans le corps 1 est montée, avec des garnitures d'étanchéité 9, une tige 10 qui se termine à l'extérieur par une dentelure 11 pour l'accouplement d'une poignée de manoeuvre (non représentée), et qui porte à l'intérieur une tête de commande 12 laquelle, moyennant une clavette 13, engage la plaque mobile 7 et lui transmet les mouvements de rotation imposés à la tige 10 par la poignée de manoeuvre. Les plaques 5 et 7 en matériau dur constituent les organes de contrôle du flux, et elles forment la paire de plaques à laquelle peut être appliquée cette invention.

Le principe fondamental de l'invention sera expliqué d'abord en faisant référence aux figures 1 à 4, dans lesquelles la conformation réelle des ouvertures de passage des plaques est représentée moyennant une transformation de coordonnées polaires en coordonnées orthogonales, de sorte que les déplacements de réglage, qui dans la réalité sont de rotation, sont représentés par une translation horizontale (suivant la flèche X des figures 2 et 3).

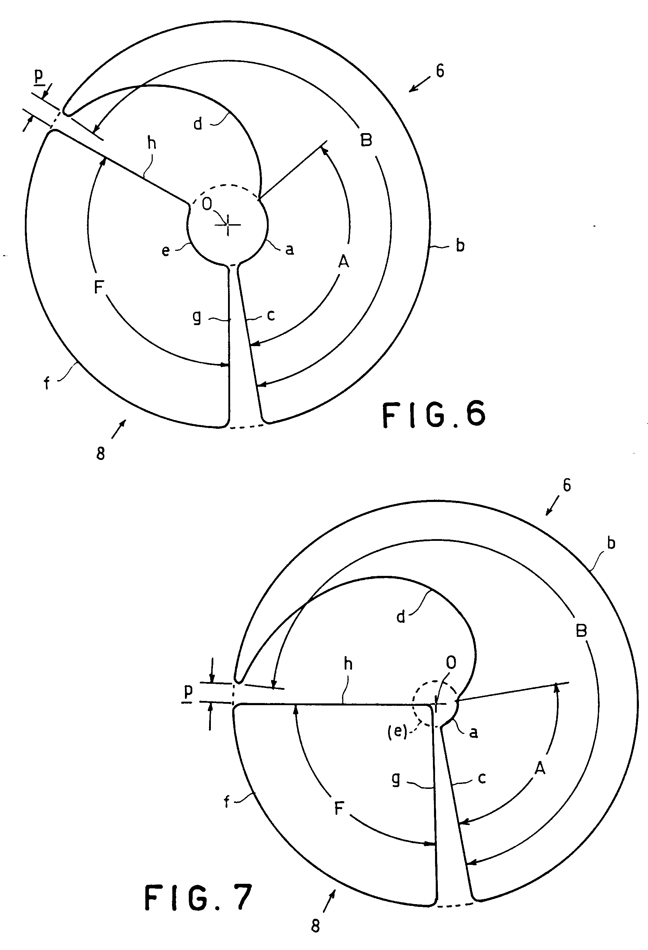

Dans la partie droite de la figure 1 est ainsi représentée l'ouverture de passage 6 de la plaque fixe 5. Cette ouverture est limitée par quatre côtés a, b, c, d, dont les trois premier sont parallèles des axes de référence du dessin (à savoir, deux parallèles à la flèche X des figures 2 et 3, le troisième perpendiculaire à cette flèche), tandis que le côté d est incliné. On remarquera que, dans la conformation réelle des plaques (figures 6 et 7), les côtés a et b sont représentés par des arcs de cercle ayant leur centre sur l'axe de rotation O de la plaque mobile, le côté c est représenté par un segment de rayon, et c'est le côté d qui a la forme d'un arc de spirale linéaire.

Dans la partie gauche de la figure 1 on a représenté de la même façon l'ouverture de passage 8 de la plaque mobile 7, ouverture qui suivant ce mode de réalisation est délimitée par quatre côtés e, f, g, h, lesqels sont tous parallèles des axes de référence du dessin. Dans la conformation réelle des plaques, les côtés e et f sont représentés par des arcs de cercle ayant leur centre sur l'axe de rotation O de la plaque mobile, et les côtés g et h sont représentés par des segments de rayon. L'ouverture 8 a donc substantiellement la forme d'un secteur circulaire.

Dans la condition de fermeture, à laquelle se réfère la figure 1, les deux ouvertures de passage 6 et 8 ne se superposent pas, et en outre, afin d'assurer l'étanchéité, il est nécessaire que leurs points les plus proches soient séparés au moins par une longueur $p$. La course d'ouverture, qui dans les plaques réelles comporte une rotation de la plaque mobile, est représentée en coordonnées orthogonales par une translation de l'ouverture 8 suivant la flèche X (axe x). Lorsque, par cette translation, la longueur $p$ a été parcourue, la superposition des ouvertures des deux plaques commence et le passage du liquide a lieu. La figure 2 montre cette condition de commencement du débit, dans laquelle la surface de superposition, encore très réduite, est indiquée par m. Au fur et à mesure que l'on ouvre le robinet, la surface de superposition des deux ouvertures de passage 6 et 8, indiquée par une hachure dans les figures 3 et 4, augmente graduellement jusqu'à ce que, dans la position d'ouverture complète (figure 4), elle correspond à la section toute entière de l'ouverture de passage 8 de la plaque mobile. Par l'observation de ces figures on peut facilement se rendre compte de la gradualité particulière de la variation de la section de passage présentée au flux, en fonction du déplacement de la plaque mobile du robinet. En indiquant par $a$ la longueur du côté a de l'ouverture 6 de la plaque fixe, par $b$ la longueur du côté b de la même ouverture, et par $f$ la longueur égale des côtés e et f de l'ouverture 8 de la plaque mobile, on remarque que le proportionnement le plus favorable doit être $a = f$, tandis que, en raison de l'inclinaison nécessaire du côté d, doit être $b > a$ et donc aussi $b > f$.

En considérant la conformation réelle des plaques (figures 6 et 7), dans laquelle le côté d a la forme d'un arc de spirale linéaire, on remarque qu'au lieu des longueurs considérées auparavant on doit prendre en considération les angles soustendus par les différents côtés des ouvertures. Le côté a sous-tend l'angle A, le coté b sous-tend l'angle B et les côtés e et f sous-tendent le même angle F. Des équations similaires des précédentes sont valables, à savoir $A = F$, $B > A$ et $B > F$. On doit maintenant remarquer que, en considération d'une des caractéristiques de l'invention, l'extrémité de plus petite largeur de l'ouverture de la plaque fixe (intersection des côtés b et d) est disposée près de la périphérie, et non pas voisin du centre, de la plaque fixe. C'est en correspondance de ce point qu'on doit prévoir une distance $p$ pour assurer l'étanchéité dans la position de fermeture. Du fait que ce point est disposé voisin de la périphérie de la plaque, l'angle sous lequel la distance $p$ est vue par le centre O est bien plus réduit de ce qu'il serait si la distance $p$ était prévue voisin du centre de la plaque, comme dans les modes de réalisation connus. Cet angle correspond à une course angulaire qui ne peut pas être utilisée aux effets du réglage, et donc il s'ensuit que l'application de l'invention autorise une exploitation meilleure du champ angulaire de manoeuvre présenté par les plaques, toutes les autres conditions demeurant égales.

Dans l'exécution suivant la figure 6, l'étendue des angles caractéristiques des ouvertures de passage des plaques est la suivante: $A = F = 120°$; $B = 225°$; et on réalise un angle de manoeuvre d'environ 235°. D'autre part, dans l'exécution suivant la figure 7, l'étendue desdits angles est la suivante: $A = F = 90°$; $B = 260°$; et on réalise un angle de manoeuvre d'environ 270°. Dans cette dernière exécution la sensibilité du réglage est donc plus élevée que dans l'exécution précédente; d'autre part, le débit maximum qui peut être livré est plus réduit, du fait de la plus petite étendue de l'ouverture de passage de la plaque mobile. On doit comprendre, toutefois, que l'étendue indiquée d'environ 235° ou d'environ 270° pour le champ angulaire de réglage est seulement un exemple, et que cette étendue peut être choisie d'une façon arbitraire dans le champ de 1/2 tour à 3/4 de tour.

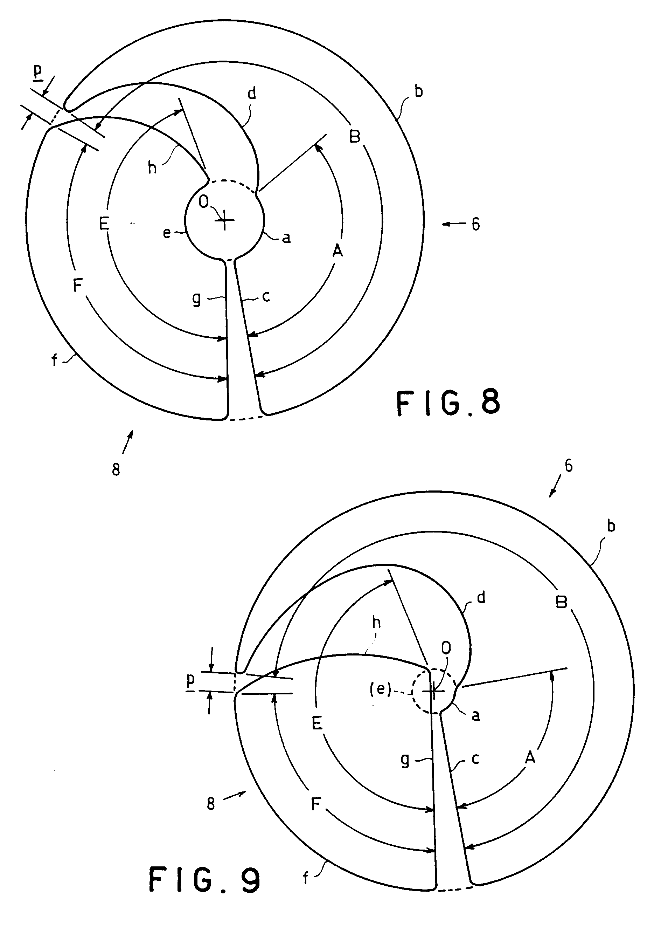

Comme le montre la figure 5, aussi le côté h de l'ouverture de passage 8 de la plaque mobile peut être incliné, au lieu d'être parallèle de l'un des axes de référence comme dans le cas de la figure 1. Toutefois, dans ce cas, l'inclinaison du côté h doit être différente de l'inclinaison du côté d de l'ouverture 6 de la plaque fixe, à l'effet d'assurer la gradualité du réglage. Les deux côtés e et f n'ont plus une longueur egale $\underline{f}$ , mais ils ont des longueurs différentes $\underline{e}$, $\underline{f}$, , et il doit être $\underline{e} > \underline{f}$ . Le comportement mutuel des deux plaques coopérant demeure substantiellement égal à celui qu'on a décrit à propos des figures 1 à 4. Dans ce cas, toutefois, dans la conformation réelle des plaques telle que montrée dans les figures 8 et 9, aussi le côté h a substantiellement la forme d'un arc de spirale linéaire. L'étendue des angles A, B et F est égale dans les figures 6 et 8, et aussi dans les figures 7 et 9, et l'étendue des angles de manoeuvre correspondants est aussi substantiellement égale. Mais, comme on le remarque par l'observation de ces figures, en adoptant une conformation en arc de spirale aussi pour le côté h de l'ouverture de passage de la plaque mobile, les autres conditions étant égales, l'ouverture de passage de la plaque mobile résulte quelque peu plus grande, et autorise ainsi un débit maximum plus grand.

On doit remarquer que, dans la configuration constructive des ouvertures de passage des plaques, il n'est pas nécessaire que les conditions exposées soient satisfaites d'une manière rigoureuse, et de même, certaines d'entr'elles ne peuvent qu'être réalisées par approximation pour des raisons de fabrication. Par exemple, tous les sommets en angle suivant les figures 1 à 5 doivent être remplacés par des raccords d'une certaine ampleur, comme le montrent les figures 6 à 9, pour les exigences de la fabrication des plaques en matériau dur. D'autre part, rien n'empêche que l'ouverture d'une plaque s'étende à des régions dans lesquelles elle ne peut pas coopérer avec l'ouverture de passage de l'autre plaque. Ainsi, dans les figures 7 et 9, les côtés e de l'ouverture de passage de la plaque mobile ont été remplacés par un raccord entre les côtés g et h, simplifiant ainsi la conformation de cette plaque. D'une façon similaire, le côté f de cette ouverture pourrait aussi être omis, en laissant libre cours au liquide de l'ouverture de la plaque mobile vers l'extérieur.

Enfin, il faut encore préciser que, bien que l'ouverture 8 a été attribuée à la plaque mobile 7 et l'ouverture 6 à la plaque fixe 5, les deux ouvertures de passage pourraient en tous cas être échangées entre la plaque fixe et la plaque mobile.

**Revendications**

1. Paire de plaques en matériau dur (ainsi dit matériau céramique, ou similaire) comprenant une première plaque (5) et une deuxième plaque (7), destinées à constituer les organes de contrôle du flux dans un robinet du type dit fileté comportant un champ de manoeuvre étendu, dans laquelle paire au moins l'un (d,h) des côtés qui définissent l'ouverture de passage (6,8) d'au moins la dite première plaque (5) a substantiellement la conformation d'un arc de spirale linéaire, l'extrémité de plus petite largeur de l'ouverture de passage (6,8) délimitée par cet arc de spirale linéaire (d,h) étant disposée voisin de la périphérie de la plaque, caractérisée en ce que l'ouverture de passage (6) de la première plaque (5) de la paire est limitée par un premier et un deuxième côtés (a,b) représentés par des arcs de cercle ayant leur centre sur l'axe de rotation (O) de la paire de plaques, par un troisième côté (c) représenté par un segment de rayon, et par un quatrième côté (d) étant le côté qui a la forme d'un arc de spirale linéaire.

2. Paire de plaques suivant la revendication 1, caractérisée en ce que seulement ladite ouverture de passage (6) de la première plaque (5) de la paire a un côté (d) qui est conformé substantiellement suivant un arc de spirale linéaire.

3. Paire de plaques suivant la revendication 2, caractérisée en ce que le côté extérieur en arc de cercle (b) de ladite ouverture de passage (6) de la première plaque (5) sous-tend un angle (B) plus grand que l'angle (A) sous-tendu par le côté intérieur en forme d'arc de cercle (a), et que les côtés intérieur (e) et extérieur (f) de l'ouverture de passage (8) de la deuxième plaque (7) de la paire sous-tendent un même angle (F) plus petit que ledit angle (B) sous-tendu par le côté extérieur en forme d'arc de cercle (b) de l'ouverture de passage (6) de la première plaque (5).

4. Paire de plaques suivant la revendication 1, caractérisée en ce qu'aussi l'ouverture de passage (8) de la deuxième plaque (7) de la paire comprend un côté (h) conformé substantiellement suivant un arc de spirale linéaire, et que les spirales linéaires suivies par les côtés en spirale (d) de la première plaque (5) et (h) de la deuxième plaque (7) ont des inclinaisons différentes.

**5.** Paire de plaques suivant la revendication 4, caractérisée en ce que le côté extérieur en arc de cercle (b) de ladite ouverture de passage (6) de la première plaque (5) sous-tend un angle (B) plus grand que l'angle (A) sous-tendu par le côté intérieur en forme d'arc de cercle (a), et que le côté intérieur (e) de l'ouverture de passage (8) de la deuxième plaque (7) de la paire sous-tend un angle (E) plus grand de l'angle (F) sous-tendu par le côté extérieur (f) mais plus petit que ledit angle (B) sous-tendu par le côté extérieur en forme d'arc de cercle (b) de l'ouverture de passage (6) de la première plaque (5).

**6.** Paire de plaques suivant la revendication 1, caractérisée en ce que l'ouverture de passage (8) de la deuxième plaque (7) de la paire a une étendue angulaire substantiellement proche de 120° (Figures 6, 8).

**7.** Paire de plaques suivant la revendication 1, caractérisée en ce que l'ouverture de passage (8) de la deuxième plaque (7) de la paire a une étendue angulaire substantiellement proche de 90° (Figures 7, 9).

**Claims**

**1.** A pair of plates of a hard material (a socalled ceramic material or the like), including a first plate (5) and a second plate (7), intended for forming the flow control means of a faucet of the socalled screw type having an extended control field, wherein at least one (d,h) of the sides which define the passage opening (6,8) of at least said first plate (5) has substantially the shape of an arc of linear spiral, the end portion having the smaller width of the passage opening (6,8) limited by this arc of linear spiral (d,h) being located near the plate periphery, characterized in that the passage opening (6) of the first plate (5) of the pair is limited by a first and a second sides (a,b) represented by circle arcs centered on the rotation axis (O) of the pair of plates, by a third side (c) represented by a radius segment, and by a fourth side (d) being the side which has the shape of an arc of linear spiral.

**2.** A pair of plates according to Claim 1, characterized in that only said passage opening (6) of the first plate (5) of the pair has one side (d) which is shaped substantially like an arc of a linear spiral.

**3.** A pair of plates according to Claim 2, characterized in that the external side (b) shaped as a circle arc of said passage opening (6) of the first plate (5) subtends an angle (B) larger than the angle (A) subtended by the internal side (a) shaped as a circle arc, and that the internal and external sides (e,f) of the passage opening (8) of the second plate (7) of the pair subtend a same angle (F) smaller than said angle (B) subtended by the external side (b) shaped as a circle arc of the passage opening (6) of the first plate (5).

**4.** A pair of plates according to Claim 1, characterized in that also the passage opening (8) of the second plate (7) of the pair includes a side (h) shaped substantially like an arc of a linear spiral, and that the linear spirals followed by the spiral side (d) of the first plate (5) and by the spiral side (h) of the second plate (7) have different slopes.

**5.** A pair of plates according to Claim 4, characterized in that the external side (b) shaped as a circle arc of said passage opening (6) of the first plate (5) subtends an angle (B) larger than the angle (A) subtended by the internal side (a), and that the internal side (e) of the passage opening (8) of the second plate (7) of the pair subtends an angle (E) larger than the angle (F) subtended by the external side (f) but smaller than said angle (B) subtended by the external side (b) shaped as a circle arc of the passage opening (6) of the first plate (5).

**6.** A pair of plates according to Claim 1, characterized in that the passage opening (8) of the second plate (7) of the pair has an angular extent substantially near 120° (Figures 6, 8).

**7.** A pair of plates according to Claim 1, characterized in that the passage opening (8) of the second plate (7) of the pair has an angular extent substantially near 90° (Figures 7,9).

**Patentansprüche**

**1.** Plattenpaar aus hartem Werkstoff (einem sogenannten Keramikstoff o.dgl.), mit einer ersten Platte (5) und einer zweiten Platte (7), die dazu bestimmt sind, die Durchfluss-Regelorgane bei einem Hahn der sogenannten Gewindeverschluss-Bauweise mit weitem Betätigungsbereich zu bilden, wobei wenigstens die eine der Seiten (d,h), die die Durchlassöffnung (6,8) von wenigstens der ersten Platte (5) abgrenzen, im wesentlichen in Form eines linearen Spiralbogens verläuft und das weniger breite Ende der durch diesen linearen Spiralbogen (d,h) begrenzten Durchlassöffnung (6, 8) in der Nähe des Plattenumfanges angeordnet ist, dadurch gekennzeichnet, dass die Durchlassöffnung (6) der ersten Platte (5) des Plattenpaares durch eine erste und eine zweite Seite (a,b), die durch mittig zur Drehachse (O) verlaufende Kreisbögen dargestellt sind, durch eine dritte, durch ein Halbmessersegment gebildete Seite (c) und durch eine vierte Seite (d) begrenzt ist, die die Seite ist, die die Form eines linearen Spiralbogens aufweist.

2. Plattenpaar nach Anspruch 1, dadurch gekennzeichnet, dass nur die Durchlassöffnung (6) der ersten Platte (5) des Plattenpaares eine im wesentlichen in Form eines linearen Spiralbogens verlaufende Seite (d) aufweist.

3. Plattenpaar nach Anspruch 2, dadurch gekennzeichnet, dass die in Form eines Kreisbogens verlaufende Aussenseite (b) der Durchlassöffnung (6) der ersten Platte (5) einen Winkel (B) umschliesst, der grösser als der durch die kreisbogenförmige Innenseite (a) umschlossene Winkel (A) ist und dass die Innenseite (e) und die Aussenseite (f) der Durchlassöffnung (8) der zweiten Platte (7) des Plattenpaares den gleichen Winkel (F) umschliessen, der kleiner als der durch die kreisbogenförmige Aussenseite (b) der Durchlassöffnung (6) der ersten Platte (5) umschlossene Winkel (B) ist.

4. Plattenpaar nach Anspruch 1, dadurch gekennzeichnet, dass die Durchlassöffnung (8) der zweiten Platte des Plattenpaares ebenfalls eine im wesentlich in Form eines linearen Spiralbogens verlaufende Seite (h) aufweist und dass die linearen Spiralbögen, nach denen die spiralförmigen Seiten (d bzw. h) der ersten Platte (5) bzw. der zweiten Platte (7) verlaufen, unterschiedliche Neigungen aufweisen.

5. Plattenpaar nach Anspruch 4, dadurch gekennzeichnet, dass die kreisbogenförmige Aussenseite (b) der Durchlassöffnung (6) der ersten Platte (5) einen Winkel (B) umschliesst, der grösser als der durch die kreisbogenförmige Innenseite (a) umschlossene Winkel (A) ist und dass die Innenseite (e) der Durchlassöffnung (8) der zweiten Platte (7) des Plattenpaares einen Winkel (E) umschliesst, der grösser als der durch die Aussenseite (f) umschlossene Winkel (F), aber kleiner als der durch die kreisbogenförmige Aussenseite (b) der Durchlassöffnung (6) der ersten Platte (5) umschlossene Winkel (B) ist.

6. Plattenpaar nach Anspruch 1, dadurch gekennzeichnet, dass die Durchlassöffnung (8) der zweiten Platte (7) des Plattenpaares eine im wesentlichen annähernd 120° betragende Winkelausdehnung (Figuren 6, 8) aufweist.

7. Plattenpaar nach Anspruch 1, dadurch gekennzeichnet, dass die Durchlassöffnung (8) der zweiten Platte (7) des Plattenpaares eine im wesentlichen annähernd 90° betragende Winkelausdehnung (Figuren 7, 9) aufweist.

FIG.1

FIG.2

FIG.3

FIG.4

FIG.5

FIG.6

FIG.7

FIG.8

FIG.9

FIG. 10